(19) Europäisches Patentamt
European Patent Office
Office européen des brevets

(11) EP 0 703 287 B1

# (12) FASCICULE DE BREVET EUROPEEN

(45) Date de publication et mention de la délivrance du brevet:
**05.04.2000 Bulletin 2000/14**

(51) Int Cl.[7]: **C09K 19/54**, G02F 1/1333

(21) Numéro de dépôt: **95114515.0**

(22) Date de dépôt: **15.09.1995**

## (54) Composition cristal liquide et cellules la contenant

Flüssigkristallzusammensetzung und Zellen, die diese enthalten

Liquid cristal composition and cells containing the same

(84) Etats contractants désignés:
**CH DE GB LI**

(30) Priorité: **22.09.1994 FR 9411322**

(43) Date de publication de la demande:
**27.03.1996 Bulletin 1996/13**

(73) Titulaire: **ASULAB S.A.**
**CH-2501 Bienne (CH)**

(72) Inventeurs:
- **Basturk, Naci**
  **CH-2068 Hauterive (CH)**
- **Chuard, Thierry**
  **CH-2206 Les Geneveys-sur-Coffrane (CH)**
- **Deschenaux, Robert**
  **CH-2006 Neuchâtel (CH)**

(74) Mandataire: **Thérond, Gérard Raymond et al**
**I C B**
**Ingénieurs Conseils en Brevets SA**
**Rue des Sors 7**
**2074 Marin (CH)**

(56) Documents cités:
**EP-A- 0 272 585** **EP-A- 0 451 905**
**EP-A- 0 541 912** **EP-A- 0 563 403**
**WO-A-94/08268**

- **LIQUID CRYSTALS, vol. 16, no. 1, Janvier 1994 LONDON GB, pages 1-31, H.-S. KITZEROW 'polymer-dispersed liquid crystals; from the nematic curvilinear aligned phase to ferroelectric films'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

EP 0 703 287 B1

## Description

La présente invention concerne une composition cristal liquide sous forme d'un gel anisotrope qui confère à une cellule à cristal liquide, pourvue d'électrodes et de plaques transparentes, un grand degré de transparence à l'état non commuté et qui présente un état diffusant par application d'un champ électrique peu élevé.

L'invention concerne également une cellule à cristal liquide dont la composition cristal liquide placée entre les plaques et les électrodes transparentes permet d'avoir un contraste élevé entre l'état commuté et l'état non commuté sans effet de mémoire, c'est-à-dire sans persistance d'un affichage après commutation.

Avec des cellules de types connus, qui font appel à des modifications de la lumière polarisée (nématique twisté ou supertwisté, ferroélectrique surface stabilisée), au moyen de polariseurs laminés à leur surface la transmission de la lumière visible à l'état transparent est seulement de l'ordre de 40 à 45 %, par rapport à l'air, valeur à comparer avec celle du verre qui est de l'ordre de 90 à 92 %. Cela signifie qu'environ la moitié de la lumière visible est absorbée par les polariseurs et qu'une faible partie est réfléchie aux interfaces. Pour améliorer ce coefficient de transmission, on a proposé des dispositifs dont l'effet optique est obtenu sans utiliser de polariseurs ou de colorants dichroïques qui absorbent partiellement la lumière.

Parmi ces types de dispositifs, on peut citer les cellules à cristal liquide qui font appel à la diffusion dynamique, procédé connu sous le sigle DS (Dynamic Scattering). Dans de telles cellules, la composition cristal liquide disposée entre les électrodes comprend essentiellement un cristal liquide dopé par des ions de sels organiques. En l'absence de champ électrique, une cellule DS est transparente, les molécules de cristaux sels organiques. En l'absence de champ électrique, une cellule DS est transparente, les molécules de cristaux liquides étant alignés et laissant passer la lumière. Par application d'un champ électrique, la migration des ions crée une turbulence qui perturbe cet alignement et rend la cellule opaque. Un tel dispositif a toutefois dû être abandonné car il présentait l'inconvénient d'avoir une durée de vie très limitée, en raison d'une dégradation rapide de la cellule, due aux réactions électrochimiques parasites initiées par les ions.

Un autre dispositif sans polariseur, connu sous le sigle PDLC (Polymer Dispersed Liquid Cristal) consiste à utiliser comme composition cristal liquide un cristal liquide dispersé sous forme de gouttelettes dans un polymère isotrope. Selon différents procédés, on crée dans le polymère des gouttelettes à l'intérieur desquelles les cristaux liquides ont un alignement propre, mais une orientation générale aléatoire d'une gouttelette à l'autre. En absence de champ électrique la cellule est alors opaque. Par application d'un champ électrique, les cristaux liquides de chaque gouttelette prennent la même orientation et la cellule devient transparente. Un tel dispositif présente toutefois l'inconvénient, en raison de l'augmentation de l'effet de surface due aux gouttelettes, de nécessiter l'application d'une tension relativement élevée pour passer d'un état opaque à un état transparent, avec un contraste le plus souvent médiocre. Lorsque l'état transparent est l'état normalement souhaité, une telle cellule présente aussi l'inconvénient de devenir soudainement opaque s'il se produit une défaillance dans la source de tension, ce qui peut constituer un danger ou un grave défaut si une telle cellule est par exemple utilisée comme valve optique. En outre, lorsque la polymérisation est réalisée sous rayonnement ultra-violet en présence d'un photo-initiateur, les radicaux libres créés sont également responsables de réactions chimiques susceptibles de dégrader la cellule. Par rapport au dispositif qui va ensuite être analysé, ce dispositif peut être considéré comme un affichage PDLC "mode normal".

Pour plus de détails sur les deux types précédents de cellules, DS et PDLC, on se reportera avantageusement à l'ouvrage de Biendra Bahadur (Liquid Cristals - World Scientific Publishing Co. Pte. Ltd. 1990).

Dans un brevet récent, EP 0 451 905, la composition cristal liquide décrite est constituée d'un cristal liquide b) de faible poids moléculaire à l'intérieur duquel on crée un réseau orienté de façon permanente par polymérisation d'un prépolymère cristal liquide a), sous rayonnement ultra-violet, et en présence d'un photo-initiateur, c'est-à-dire par polymérisation d'un composé chimique dont le groupe mésogénique central est susceptible de maintenir dans le même alignement les deux groupes cycliques rigides de la molécule, pour conférer au polymère ainsi obtenu les propriétés d'un cristal liquide.

Le composé a) peut être représenté schématiquement par la formule II de la feuille de formules.

Dans la formule II, Y est un groupe mésogénique, une liaison simple, ou un radical de liaison bivalent usuel destiné à maintenir l'alignement des systèmes cycliques $B_1$ et $B_2$, respectivement substitués par des chaînes $R_1$ et $R_2$, telles que alkyl, alkoxy, arylalkyl ou arylalkoxy, lesdites chaînes ayant des groupes terminaux $A_1$ et $A_2$ réactifs polymérisables.

La polymérisation du composé a) est effectuée in situ dans une cellule pourvue de couches d'alignement, ce qui permet d'obtenir dans la composition cristal liquide un réseau orienté de façon permanente présentant un degré d'ordre élevé. Lorsque les composés a) et b) ont une anisotropie diélectrique positive, la cellule présente un état transparent à l'état non commuté et un état opaque par application d'un champ électrique. Toutefois, en raison du degré d'ordre relativement élevé de la composition cristal liquide, la tension de seuil qu'il est nécessaire d'appliquer pour passer de l'état transparent à l'état opaque est assez élevée. Une telle cellule est généralement désignée par le sigle PNLC (Polymer Network Liquid Cristal).

De façon surprenante, on a découvert qu'il était possible d'améliorer les caractéristiques générales d'une cellule du type précité en modifiant, dans la composition cristal liquide, la configuration du prépolymère a) pour obtenir un réseau réticulé présentant un degré d'ordre intermédiaire entre celui d'un réseau orienté obtenu à partir d'un prépolymère cristal liquide et celui d'un réseau ordinaire obtenu à partir d'un prépolymère strictement isotrope.
Alors que le groupe de liaison mésogénique -Y- de la formule II semblait être un élément déterminant pour obtenir une cellule de type PNLC, on a découvert qu'en remplaçant ce groupe -Y- par un groupe -X- rompant l'alignement des parties $A_1$ - $R_1$ - $B_1$ et $B_2$ - $R_2$ - $A_2$, on conservait non seulement ces propriétés, mais en plus on les améliorait, notamment au niveau de la tension de seuil et de saturation.
La composition cristal liquide selon l'invention est donc obtenue par polymérisation dans un cristal liquide d'un prépolymère non cristal liquide correspondant à la formule I de la feuille de formules, dans laquelle :

- X est un groupe central bivalent non mésogénique, dont les liaisons libres forment un angle $\alpha$ inférieur à 180°, ledit groupe central étant choisi parmi les groupes diphényl éther, diphényl méthane, 2,2-diphényl propane, diphényl thioéther, diphényl sulfone, et 1,2 ou 1,3 phénylène éventuellement substitué par un ou plusieurs alkyl, alcoxy, trifluorométhyl ou halogène.
- B1 et B2 sont des groupes cycliques rigides choisis parmi les groupes phényl, benzoate, biphényl, pyrimidine, dioxane et cyclohexyl, qui conféreraient au prépolymère des propriétés cristal liquide si X était choisi pour procurer un angle $\alpha$ = 180°.
- $R_1$ et $R_2$ sont identiques ou différents, chacun représentant une chaîne alkyl, alkoxy, arylalkyl ou arylalkoxy, éventuellement substituée;
- $A_1$ et $A_2$ sont identiques ou différents, chacun représentant une fonction réactive polymérisable, choisie parmi un acrylate, un méthacrylate, un vinyle et un époxy;

En raison de sa structure non linéaire et de la liberté de rotation d'une partie de la molécule autour de l'une des liaisons du groupe central bivalent -X-, le prépolymère de formule I présente une plus grande flexibilité qu'un composé de formule II, ce qui, après polymérisation, conduit à un réseau réticulé moins ordonné que celui obtenu avec le composé de formule II. On a également observé que la polymérisation d'un prépolymère de formule I sous rayons ultraviolets était aussi possible sans adjonction de photo-initiateurs, et que les propriétés électro-optiques d'une cellule ainsi obtenue en étaient améliorées. Le pourcentage de prépolymère I dans la composition cristal liquide selon l'invention, qui est fonction de la solubilité du prépolymère I dans le cristal liquide b) choisi, sera généralement compris entre 1 % et 20 %, de préférence entre 3 % et 8 %. L'anisotropie optique ($\Delta n$) du cristal liquide b) influençant aussi l'intensité de la diffusion, ont choisira de préférence un cristal liquide d'anisotropie optique élevée, dans la mesure où ce choix est compatible avec la solubilité recherchée.
Des exemples de prépolymère selon l'invention sont représentés, sans faire apparaître l'angle $\alpha$, par le diacrylate de formule Ia de la feuille de formules, et par les homologues dans lesquels le groupe central diphényl éther est remplacé par des groupes correspondant aux formules Ib à Ig.
Dans la suite de la description les propriétés électro-optiques d'une cellule dont la composition cristal liquide comprend un polymère du diacrylate de formule Ia seront comparées à celles d'une cellule ayant une composition cristal liquide telle que celle décrite dans l'exemple du brevet EP 0 451 905, à savoir une composition dans laquelle le prépolymère répond à la formule IIa de la feuille de formules. On observera que la formule IIa ne diffère de la formule Ia que par remplacement du radical mésogénique de liaison 1,4-phénylène par le groupe diphényl éther dont les liaisons libres en para sur les cycles phényl imposent un angle de l'ordre de 110-120° aux parties $A_1$-$R_1$-$B_1$ et $B_2$-$R_2$-$A_2$.
Le composé cristal liquide b) de faible poids moléculaire utilisé dans une composition de cristal liquide selon l'invention peut être un de ceux décrits dans le brevet EP 0 451 905, tels que ceux représentés par les formules IIIa à IIId de la feuille de formules, possédant une anisotropie diélectrique positive ($\Delta\varepsilon>0$). Il peut également être un mélange des cristaux liquides précités. On peut également utiliser, comme cela apparaîtra dans les exemples, ci-après un cristal liquide d'anisotropie diélectrique négative ($\Delta\varepsilon<0$). La composition cristal liquide selon l'invention peut en outre comprendre, de façon connue en soit, un agent chiral pour améliorer le contraste.
Le réseau réticulé de la composition cristal liquide selon l'invention peut également être obtenu par copolymérisation d'un prépolymère de formule I et d'au moins un autre monomère, cristal liquide ou isotrope, à une concentration relative comprise entre 5 % et 50 % de préférence entre 10 % et 20 %. Le monomère copolymérisable peut aussi être un autre prépolymère de formule I.
Les prépolymères de formule Ia à Ig, qui sont des composés chimiques nouveaux, peuvent être préparés selon le schéma réactionnel représenté par les étapes IVa à IVc de la feuille de formules, comme expliqué plus en détails ci-après.

Synthèse du 4,4'-Bis {4-[6-(acryloyloxy) hexyloxyl benzoate} diphényl éther. (diacrylate de formule Ia)

Les composés intermédiaires obtenus à l'issue des étapes IVa et IVb ont été préparés selon le procédé décrit par K. Geibel, A. Hammerschmidt, F. Strohmer (*Adv. Mater.* **1993**, *5*, 107), et obtenus respectivement avec des rendements de 55 % et 93 %.

L'étape IVc s'effectue selon le procédé décrit par D.J. Broer, J. Boven, G.N. Mol, G. Challa (*Makromol. Chem.* **1989**, *190*, 2255) pour la synthèse du composé IIa, mais en remplaçant l'hydroquinone par le 4,4' dihydroxyphényléther.

A cet effet, on a dissous 8,00 g (27,0 mM) de l'acide benzoïque obtenu à l'étape IVb dans 80 ml de 1,2-diméthoxyéthane et refroidi à -30°, puis on a ajouté à la solution 3,09 g (27,0 mM) de chlorure d'acide méthane sulfonique et 5,47 g, (54,0 mM) de triéthylamine, et maintenu le mélange 1 heure à -30°C. On a ensuite ajouté à la solution 2,73g (13,5 mM) de 4,4' - dihydroxyphényléther et 1,66 g (13,6 mM) de 4-(diméthylamino)pyridine et laissé le mélange pendant 3 heures et demie à 0°C. On l'a ensuite hydrolysé avec 250 ml d'eau et extrait au chlorure de méthylène. Après extraction, on a éliminé le solvant et obtenu 11,7 g d'une huile brun pâle qu'on a purifiée par chromatographie sur une colonne à gel de silice en prenant comme éluant un mélange chlorure de méthylène/acétate d'éthyle (98/2). On a regroupé les fractions contenant le composé Ia et séché sur sulfate de magnésium. Après élimination du solvant et recristallisation à partir d'alcool éthylique chaud, on a obtenu, avec un rendement de 67,6 %, 6,84 g (9,12 mM) de composé du titre, sous forme d'une poudre cristalline blanche ayant pour point de fusion 65°C, et pour analyse élémentaire :

| | C % | H % |
|---|---|---|
| Calculé | 70,40 | 6,13 |
| Trouvé | 70,29 | 6,39 |

Le spectre RMN (200 MHz, $CDCl_3$) du composé Ia est le suivant : 1,47-1,89 (*m*, 16H); 4,06 (t, 4H); 4,19 (*t*, 4H); 5,83 (*dd*, 2H); 6,13 (*dd*, 2H); 6,42 (*dd*, 2H); 6,97 (*d*, 4H); 7,08 (*d*, 4H); 8,15 (*d*, 4H).

Par analyse thermique différentielle et par examen sous microscope de cycles chauffage-refroidissement, on a observé que ce composé, passait par chauffage d'une phase cristalline à une phase isotrope, et par refroidissement de la phase isotrope à la phase cristalline sans présenter d'état intermédiaire cristal liquide

Le composé IIa, pris comme référence, dont le point de fusion est de 109°C, présente au contraire des états de transition caractéristiques d'un cristal liquide [109°C (C/N); 156°C (N/I-I/N); 92°C ($C/S_c$); 80°C ($S_c/C$)].

Synthèse du 4,4'-Bis {4-[6-(acryloyloxy) hexyloxy] benzoate} diphénylène méthane (diacrylate de formule Ib).

En répétant le processus qui vient d'être décrit pour la synthèse du composé Ia, mais en utilisant dans l'étape IVc 2,48 g (12,4 mM) de bis (4-hydroxy-phényl) méthane on a obtenu 5,84 g (rendement 63 %) de composé du titre sous forme cristallisée incolore, ayant pour point de fusion F = 69 °C et pour analyse élémentaire :

| | C % | H % |
|---|---|---|
| Calculé | 72,17 | 6,46 |
| Trouvé | 71,98 | 6,45 |

Le spectre RMN (400 MHz, $CDCl_3$) du composé Ib est le suivant : 1,43-1,58 (*m*, 8H); 1,69-1,76 (*m*,4H); 1,81-1,88 (*m*, 4H); 4,02 (*s*, 2H); 4,05 (*t*,4H); 4,18 (*t*,4H); 5,82 (dd, 2H); 6,13 (*dd*, 2H); 6,40 (*dd*, 2H); 6,96 (*d*, 4H); 7,13 (*d*,4H); 7,24 (*d*, 4H); 8,13 (*d*, 4H).

L'analyse thermique différentielle et l'examen sous microscope confirment que le composé obtenu ne possède pas les propriétés de cristal liquide.

Synthèse du 4,4'-Bis {4-[6-(acryloyloxy) hexyloxyl benzoate} diphénylène -2,2- propane {diacrylate de formule Ic)

Selon le même schéma réactionnel que celui de la synthèse du composé Ia, mais en utilisant dans la dernière étape IVc 3,1 g (13,1 mM) de 2,2-bis(4-hydroxyphényl) propane on a obtenu 7, 91 g (rendement 78 %) de composé du titre sous forme d'une poudre cristalline incolore, ayant pour point de fusion F = 108 °C et pour analyse élémentaire :

| | C % | H % |
|---|---|---|
| Calculé | 72,66 | 6,75 |

(suite)

| | C % | H % |
|---|---|---|
| Trouvé | 72,41 | 6,65 |

Le spectre RMN (200 MHz, $CDCl_3$) est le suivant : 1,47-1,61 (*m*, 8H); 1,66-1,91 (*m*, 8H); 1,72 (*s*, CH); 4,05 (*t*, 4H); 4,19 (*t*, 4H); 5,82 (*dd*, 2H); 6,13 (*dd*, 2H); 6,41 (*dd*, 4H); 6,96 (*d*, 4H); 7,11 (*d*, 4H); 7,30 (*d*, 4H); 8,13 (*d*, 4H).

Le composé obtenu ne présente pas les propriétés d'un cristal liquide.

De la même façon, on a également préparé les composés de formules Id à Ig, dont les caractéristiques sont indiquées dans le tableau I.

TABLEAU I

| | | Id | Ie | If | Ig |
|---|---|---|---|---|---|
| Point de fusion | | 65 °C | 91 °C | 54 °C | 57 °C |
| C % | calculé | 68,91 | 66,15 | 69,29 | 69,29 |
| | trouvé | 68,82 | 65,98 | 69,20 | 69,12 |
| H % | calculé | 6,05 | 5,80 | 6,20 | 6,20 |
| | trouvé | 6,04 | 5,90 | 6,51 | 6,38 |

L'invention sera mieux comprise à la lecture des exemples ci-après de réalisation de cellules selon l'invention, en référence aux dessins annexés dans lesquels:

- la figure 1 représente une vue en coupe d'une cellule selon l'invention.
- les figures 2 à 9 représentent des diagrammes donnant le pourcentage de transmission T des cellules testées en fonction de la tension appliquée U exprimée en volts.

Exemple 1 (Figures 1 et 2)

Pour réaliser une composition cristal liquide selon l'invention, on a dissous 5 % en poids de composé Ia dans le cristal liquide E7, qui est un mélange connu de cristaux liquides, du type cyanobiphényle à anisotropie diélectrique positive, de formules IIIa, IIIb, IIIc, IIId, de la feuille de formules, dans les proportions respectives de 51 %, 25 %, 16 % et 8 %, ledit cristal liquide E7 étant commercialement disponible chez Merk LTD (Poole-GB). On a ensuite ajouté 0,5 % d'un agent chiral R 1011, disponible chez Merk Darmstadt. Aucun photo-initiateur n'a été ajouté à ce mélange. On a ensuite rempli au moyen de ce mélange une cellule, telle que celle qui est représentée à la figure 1, comportant deux plaques 1,2 transparentes, distantes de 9 µm et munies d'électrodes transparentes 3,4 (par exemple en ITO), lesdites électrodes étant recouvertes de couches d'alignement planaire 5,6, par exemple de polyimide. La cellule est fermée selon les méthodes habituelles au moyen d'un cadre de scellement 7 et les électrodes sont reliées à une source de tension 8 et à un circuit de commande 9 permettant de faire un balayage en augmentant, puis en diminuant la tension. On a exposé la cellule ainsi obtenue pendant 4 heures dans un appareil SUNTEST®, fabriqué par la société Original Hanau (Allemagne) pour simuler la composition de la lumière solaire au zénith sous nos latitudes.

Une fois la polymérisation terminée, la composition cristal liquide est formée d'un réseau 10, résultant de la polymérisation du composé Ia, imprégné d'une phase continue 11 de cristal liquide E7.

On a alors évalué les propriétés électro-optiques de la cellule en mesurant, au moyen d'un microscope équipé d'un photomultiplicateur, le pourcentage de transmission $T = \frac{Io}{It}$ x 100 de la cellule en fonction de la tension appliquée U avec une vitesse de balayage de 40 $mv.s^{-1}$. Le résultat de cette mesure est représenté sur la figure 2 par la courbe Ia qui montre qu'on obtient une forte diminution de la transmission (17 %) avec une faible tension de commutation (environ 4,5 V). Les flèches représentent le sens de balayage en tension. Elles ne sont pas reportées sur les figures suivantes, sachant que, lorsqu'il y a dédoublement de la courbe, la courbe la plus externe correspond à la montée en tension.

En répétant l'expérience réalisée dans cet exemple 1 mais en choisissant d'autres cristaux liquides, on observe que la polymérisation du prépolymère de formule I selon l'invention sous rayonnement ultraviolet est toujours possible sans photo-initiateur. A titre illustratif les courbes 2 et 3 de la figure 2 ont été obtenues avec le même type de cellule mais avec d'autres cristaux liquides.

Pour la courbe 2, on a utilisé le cristal liquide E63, qui est un mélange composé de cyanobiphényles et de phénylbenzoates, de Merk Ltd dans lequel on a dissous 5 % en poids de prépolymère Ia et 0,25 % d'agent chiral R

1011, la polymérisation étant toujours effectuée sans photo-initiateur.

Pour la courbe 3, on a utilisé le cristal liquide TL 205, qui est un mélange composé de diphényléthanes, de terphényles et de biphényles, de Merk Ltd, dans lequel on a dissous 5 % en poids de prépolymère Ia et 0,25 d'agent chiral R 1011.

Exemple 2 (Figure 3)

Dans cette expérience on a réalisé des cellules en suivant les étapes de fabrication de la cellule correspondant à la courbe 1a, mais en formant le réseau réticulé avec d'autres prépolymères selon l'invention. La courbe 1b de la figure 3 correspond à une cellule dans laquelle le prépolymère utilisé est le composé Ib, la polymérisation ayant été effectuée pendant environ 65 h sous rayonnement ultraviolet sans photo-initiateur, tous les autres composants de la composition cristal liquide étant les mêmes que ceux utilisés pour la cellule de la courbe 1a.

De la même façon la courbe 1c de la figure 3 correspond au prépolymère Ic avec une durée de polymérisation de 21 h.

Sur la figure 3, on a également reporté la courbe 1a montrant que trois exemples de prépolymère selon l'invention ont un comportement électro-optique comparable, la remontée de la valeur de transmission sur la courbe 1c, lorsque la tension augmente au delà de la valeur correspondant à la diffusion maximum, s'expliquant par une plus faible solubilité du prépolymère 1c dans le cristal liquide E7.

Exemple 3 (Figure 4)

Afin d'évaluer l'influence de l'adjonction d'un photo-initiateur, on a réalisé une cellule ayant la même composition cristal liquide que celle correspondant au diagramme 1a mais en ajoutant au mélange, 0,5 % d'Irgacure® 369, photo-initiateur de type morpholinocétone commercialement disponible chez CIBA-GEIGY. La cellule ainsi obtenue a ensuite été exposée au rayonnement ultraviolet, puis on a effectué la mesure du pourcentage de transmission en fonction de la tension appliquée. Le résultat de cette mesure est représenté à la figure 4 par la courbe 4, qui montre, par comparaison avec la courbe 1a, où la polymérisation avait été obtenue sans photo-initiateur, que l'adjonction d'un photo-initiateur augmente la diffusion (T = 10 %), mais a un effet défavorable sur la tension de seuil qui est alors plus élevée.

Exemple 4 (Figure 5)

Selon un processus comparable à celui de l'exemple 3 on a réalisé un mélange contenant 5 % de composé de formule IIa, connu par le brevet EP 0 451 905, dissous dans le cristal liquide E7 et ajouté 0,5 % d'agent chiral R 1011, et 0,5 % de photo-initiateur Irgacure® 369, puis polymérisé sous rayonnement ultra-violet. La courbe 5 de la figure 5 montre, par comparaison avec la courbe 4 de la figure 4, que la tension de commutation est nettement plus élevée.

Dans les exemples 1 à 4 précédents, l'alignement des compositions cristal liquide (cristal liquide et prépolymère) est planaire et ladite composition à une anisotropie diélectrique positive ($\Delta\varepsilon>0$). Lorsqu'on applique un champ électrique $\vec{E}$, les molécules du cristal liquide tendent à s'orienter dans la direction du champ, c'est-à-dire perpendiculairement à la surface des électrodes.

Exemple 5 (Figure 6)

Dans la cellule correspondant à cet exemple 5, on a au contraire utilisé un cristal liquide ayant une anisotropie diélectrique négative ($\Delta\varepsilon<0$) et une structure initiale homéotrope, dans laquelle les molécules sont orientées perpendiculairement à la surface des électrodes. Lorsqu'on applique un champ électrique $\vec{E}$ , les molécules de cristal liquide tendent à se mettre dans une direction perpendiculaire à celle du champ $\vec{E}$, de façon à ce que leur moment dipolaire soit dans la direction de ce champ. Ce mouvement du cristal liquide d'anisotropie diélectrique négative est entravé par le réseau réticulé obtenu in situ à partir du prépolymère selon l'invention, et on obtient un aspect diffusant.

L'expérience a été réalisée avec une cellule de 9µm d'épaisseur, pourvue de plaques et d'électrodes transparentes, et de couches d'alignement homéotrope. Le mélange devant être introduit dans la cellule est obtenu en dissolvant 5 % du prépolymère Ia et 0,25 % d'agent chiral R 1011 dans un cristal liquide d'anisotropie diélectrique négative, tel que le composé ZLI 4788.000 commercialement disponible chez Merk, et dont le pas de l'hélice est de 12µm, c'est-à-dire dont le pas est tel que la structure en hélice ne peut pas se former spontanément en l'absence de champ, compte tenu de l'épaisseur choisie pour la cellule. Aucun photo-initiateur n'est ajouté. Après remplissage et scellement, la cellule est soumise pendant 5 h. au rayonnement ultraviolet. Après polymérisation, la cellule obtenue est parfaitement transparente et par application d'un champ électrique on obtient un état diffusant. La courbe 6 de la

figure 6 représente la variation de la transmission en fonction de la tension.

L'orientation homéotrope peut être obtenue en traitant les surfaces en regard de la cellule au moyen d'un agent connu, tel qu'un silane par exemple commercialement disponible chez Petrarch (USA) sous les références DMOAP, ODS-M ou ODS-E.

Exemple 6 (Figure 7)

La cellule réalisée selon cet exemple montre qu'il est également possible d'obtenir une composition cristal liquide en créant le réseau réticulé non pas uniquement à partir d'un prépolymère de formule I selon l'invention, mais en utilisant simultanément un autre monomère pour former un copolymère.

Dans une cellule de 9µm pourvue de plaques et d'électrodes transparentes et de couches d'alignement, on a introduit un mélange composé du cristal liquide E7 dans lequel on a dissous 0,25 % d'agent chiral R 1011, 5 % de prépolymère Ia et 0,5 % de ZONYL® de Dupont de Nemours, monomère isotrope de type fluoroalkyl-méthacrylate, puis exposé au moins 4 heures au rayonnement ultraviolet.

A titre comparatif, on a préparé exactement de la même façon une deuxième cellule sans ajouter le monomère ZONTYL®.

Sur la figure 7, on a rapporté la variation du pourcentage de transmission en fonction de la tension avec le copolymère Ia-ZONYL® (courbe 7) et avec le polymère Ia seul (courbe 8). On observe que la cellule avec le copolymère présente à l'état commuté un état diffusant plus élevé, c'est-à-dire un pourcentage de transmission plus faible.

Des résultats comparables ont été obtenus avec d'autres produits isotropes copolymérisables, tels que d'autres ZONYL® de Dupont de Nemours ou des FLUORAD® commercialisés par 3M.

On a également observé que les caractéristiques électro-optiques du système pouvaient être modifiées en faisant varier la concentration du deuxième composé copolymérisable dans le mélange.

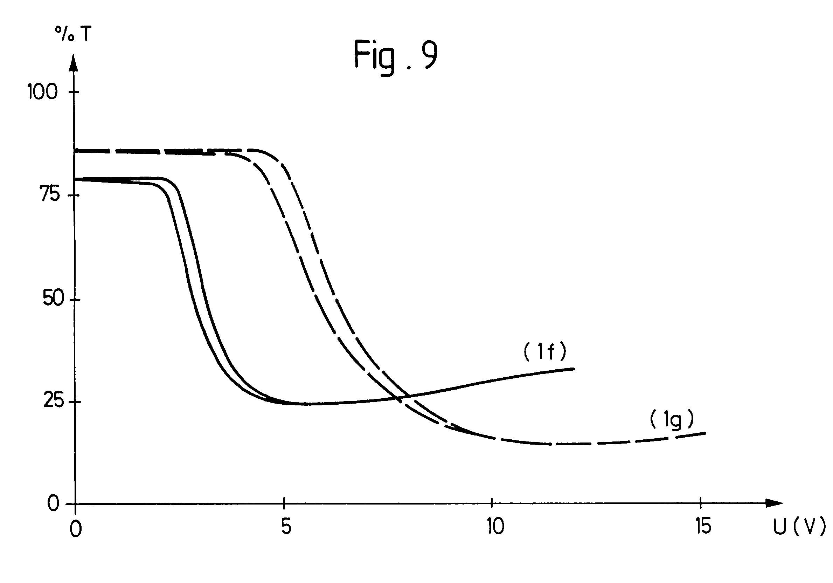

Exemple 7 (Figures 8 et 9)

Selon un processus comparable à celui de l'exemple 1, on a réalisé des cellules avec des électrodes de 9 µm, ayant comme composition cristal liquide le composé E7, 0,25 % d'agent chiral R1011 et un des composés de l'invention Id à Ig. Les pourcentages de composés Id à Ig dans la composition cristal liquide et les conditions de polymérisation sont mentionnées dans le tableau II.

TABLEAU II

| | Id | Ie | If | Ig |
|---|---|---|---|---|
| Pourcentage | 4,99 % | 1,99 % | 1,99 % | 7 % |
| Photo-initiateur | Aucun | Aucun | Aucun | 0,1% IC369 |
| Temps de polymérisation | 15 h. | 4 h. | 2 h. | 2 h. |

Les propriétés électro-optiques des cellules ainsi obtenues ont été évaluées comme indiqué dans l'exemple 1 et correspondent aux courbes 1d et 1e de la figure 8 pour les composés Id et Ie, et aux courbes 1f et 1g de la figure 9 pour les composés If et Ig.

Dans les exemples 1 à 7 qui viennent d'être décrits, on a toujours supposé que les deux électrodes étaient transparentes et recouvraient la totalité de la surface de chaque support transparent, c'est-à-dire que la cellule agissait en fait comme une valve optique. Selon des procédés connus de l'homme de métier, il est également possible de structurer au moins une des électrodes en segments pouvant sélectivement être mis sous tension par l'intermédiaire d'un circuit de commande pour former une cellule d'affichage graphique, numérique ou alpha-numérique. De même, il est possible lorsque la cellule permet un affichage, d'augmenter le contraste de façon connue en ajoutant un réflecteur dans la construction de la cellulle, et/ou en incorporant un colorant dichroïque dans la composition cristal liquide.

I

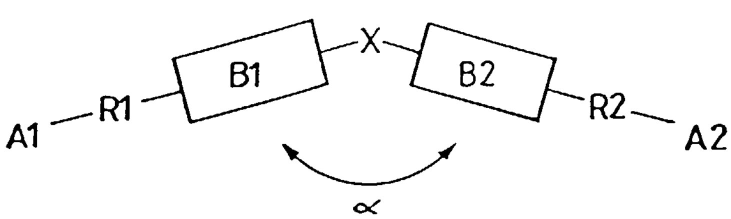

Ia

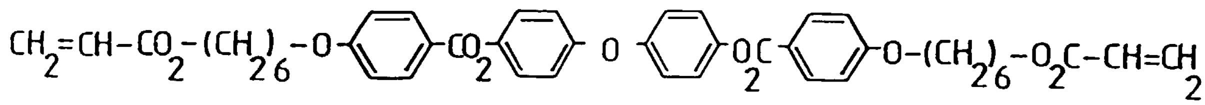

Ib

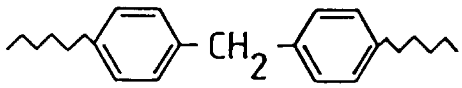

Ic

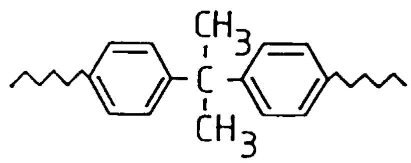

Id

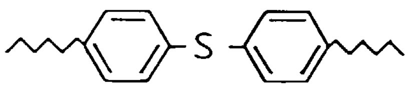

Ie

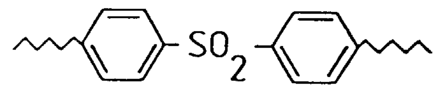

If

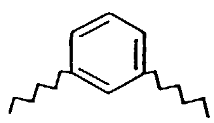

Ig

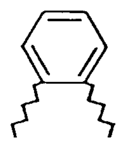

II

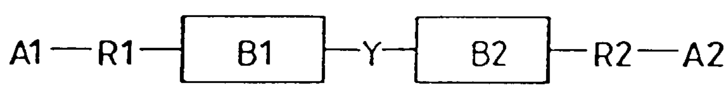

IIa

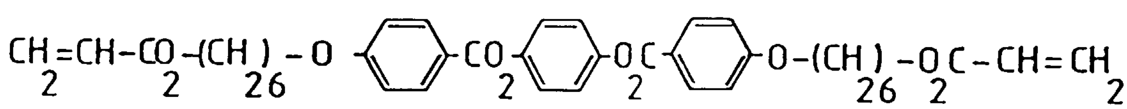

IIIa

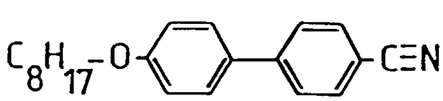

IIIc

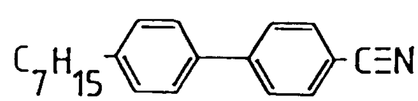

IIIb

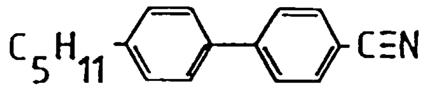

IIId

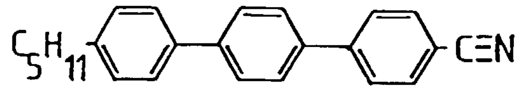

SCHEMA DE REACTION

IVa

IV b

IV c

I

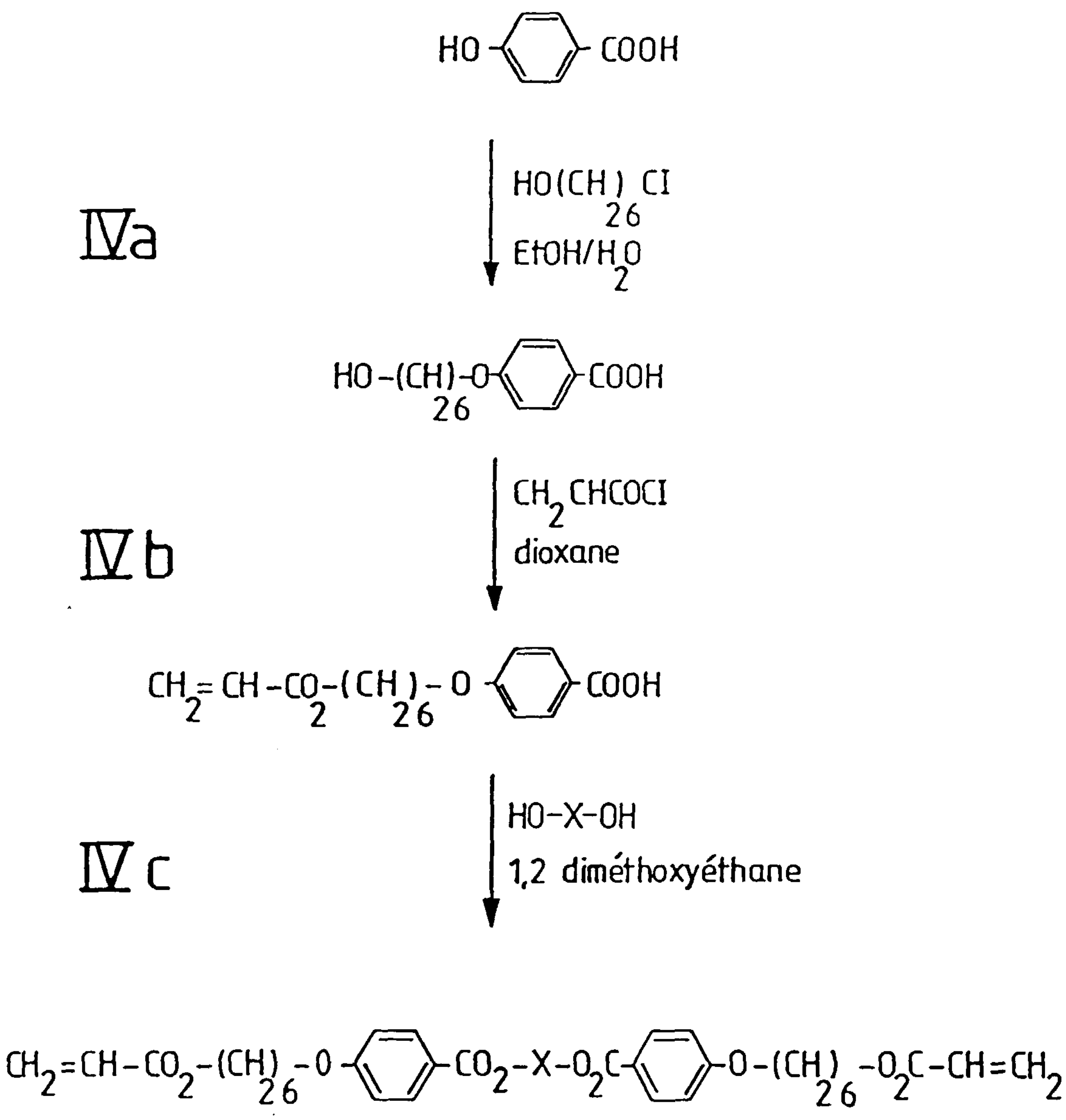


## Revendications

1. Composition cristal liquide sous forme de gel anisotrope comprenant d'un cristal liquide de faible poids moléculaire à l'intérieur duquel est formé un réseau réticulé obtenu par polymérisation d'un prépolymère, caractérisée en ce que ledit réseau présente un degré d'ordre intermédiaire entre celui d'un réseau orienté qui serait obtenu à partir d'un prépolymère cristal liquide et celui d'un réseau ordinaire qui serait obtenu à partir d'un prépolymère strictement isotrope, non cristal liquide correspond à la formule I suivante :

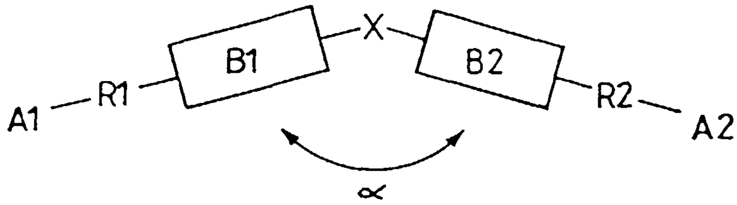

dans laquelle :

- X est un groupe central bivalent non mésogénique, dont les liaisons libres forment un angle α inférieur à 180°, ledit groupe central étant choisi parmi les groupes diphényl éther, diphényl méthane, 2,2-diphényl propane, diphényl thioéther, diphényl sulfone, et 1,2 ou 1,3 phénylène éventuellement substitué par un ou plusieurs alkyl, alcoxy, trifluorométhyl ou halogène.
- B1 et B2 sont des groupes cycliques rigides choisis parmi les groupes phényl, benzoate, biphényl, pyrimidine, dioxane et cyclohexyl, qui confèreraient au prépolymère des propriétés cristal liquide si X était choisi pour procurer un angle α = 180°.
- $R_1$ et $R_2$ sont identiques ou différents, chacun représentant une chaîne alkyl, alkoxy, arylalkyl ou arylalkoxy, éventuellement substituée;
- $A_1$ et $A_2$ sont identiques ou différents, chacun représentant une fonction réactive polymérisable, choisie parmi un acrylate, un méthacrylate, un vinyle et un époxy;

**2.** Composition cristal liquide selon la revendication 1, caractérisée en ce que le prépolymère de formule I est choisi parmi le 4,4'-Bis{4-[6-(acryloyloxy)hexyloxy]benzoate}phényl éther, 4,4'-Bis{4-[6-(acryloyloxy)hexyloxy]benzoate} diphénylène méthane, ou 4,4'-Bis{4-[6-(acryloyloxy)hexyloxy]benzoate} diphénylène 2,2-propane.

**3.** Composition cristal liquide selon la revendication 1, caractérisée en ce que le cristal liquide présent dans la composition possède une anisotropie diélectrique positive.

**4.** Composition cristal liquide selon la revendication 1, caractérisée en ce que le cristal liquide présent dans la composition possède une anisotropie diélectrique négative.

**5.** Composition cristal liquide selon la revendication 1, caractérisée en ce qu'elle contient entre 1 % et 20 %, de préférence entre 3 % et 8 % de prépolymère de formule I.

**6.** Composition cristal liquide selon la revendication 1, caractérisée en ce que le réseau réticulé est obtenu en ajoutant un autre monomère copolymérisable avec le prépolymère de formule I.

**7.** Composition cristal liquide selon la revendication 6, caractérisée en ce que l'autre monomère copolymérisable est aussi un prépolymère de formule I.

**8.** Procédé d'obtention d'une composition cristal liquide selon une quelconque des revendications 1 à 7, caractérisé en ce que le réseau réticulé est formé par polymérisation ou copolymérisation sous rayonnement ultraviolet.

**9.** Procédé selon la revendication 8, caractérisé en ce que le mélange polymérisable contient en outre un photo-initiateur.

**10.** Cellule à cristal liquide comprenant deux supports transparents en regard, pourvus sur leurs faces internes d'électrodes transparentes reliées à une source de tension par l'intermédiaire d'un circuit de commande, ladite cellule étant fermée par un cadre de scellement pour recevoir dans l'espace délimité par les supports et le cadre de scellement une composition cristal liquide, caractérisée en ce que ladite composition cristal liquide comprend un cristal liquide de faible poids moléculaire à l'intérieur duquel est formé un réseau réticulé par polymérisation d'un prépolymère non cristal liquide, tel que défini dans les revendications 1 à 9.

**11.** Cellule à cristal liquide selon la revendication 10, caractérisée en ce qu'au moins une des électrodes transparentes est structurée en segments pouvant sélectivement être mis sous tension pour former une cellule d'affichage graphique, numérique ou alphanumérique.

**12.** Cellule à cristal liquide selon la revendication 11, caractérisée en ce qu'elle comporte en outre un réflecteur.

**13.** Cellule à cristal liquide selon la revendication 10, caractérisée en ce que la composition cristal liquide contient en outre un colorant dichroïque.

**Patentansprüche**

**1.** Flüssigkristallzusammensetzung in Gestalt von anisotropischem Gel, umfassend einen Flüssigkristall von geringem Molekulargewicht, in dessen Innerem ein netzartiges Gitter gebildet ist, das durch Polymerisation von einem Vorpolymeren erhalten ist, dadurch gekennzeichnet, daß das Gitter eine Zwischenstufe der Reihenfolge zwischen der eines orientierten Gitters, das ausgehend von einem Flüssigkristallvorpolymeren erreicht wird, und der eines normalen Gitters, das ausgehend von einem nicht flüssigkristallinen streng isotropen Vorpolymeren entsprechend der nachfolgenden Formel I erreicht wird, aufweist

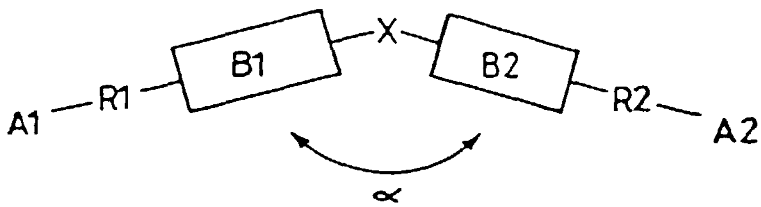

in der

- X eine zentrale bivalente nicht mesogene Gruppe ist, deren freie Bindungen einen Winkel $\alpha$ geringer als 180° bilden, wobei die zentrale Gruppe unter den Gruppen Diphenylether, Diphenylmethan, 2,2-Diphenylpropan, Diphenylthioether, Diphenylsulfon und 1,2- oder 1,3-Phenylen, gegebenenfalls substituiert durch ein oder mehrere Alkyl-, Alkoxy-, Trifluormethylgruppen oder Halogenatome ausgewählt sind,
- B1 und B2 starre zyklische Gruppen ausgewählt unter den Gruppen Phenyl, Benzoat, Biphenyl, Pyrimidin, Dioxan und Cyklohexyl sind, die dem Vorpolymeren flüssigkristalline Eigenschaften gewähren, wenn X ausgewählt ist, um einen Winkel $\alpha$ = 180° zu bewirken,
- R1 und R2 identisch oder verschieden sind und jeweils eine gegebenenfalls substituierte Alkyl-, Alkoxy-, Arylalkyl oder Arylalkoxy-Kette repräsentieren,
- A1 und A2 identisch oder verschieden sind und jeweils eine polymerisierbare reaktive Funktion, ausgewählt aus einem Acrylat, einem Methacrylat, einem Vinyl und einem Epoxy repräsentieren.

**2.** Flüssigkristallinzusammensetzung nach Anspruch 1, dadurch gekennzeichnet, daß das Vorpolymere von Formel I ausgewählt ist aus 4,4'-Bis{4-[6-(acrylyloxy)hexyloxy]bezoat}phenylether, 4,4'-Bis{4-[6-(acrylyloxy)hexyloxy]bezoat}diphenylmethan, oder 4,4'-Bis{4-[6-(acrylyloxy)hexyloxy]bezoat}diphenylen-2,2-propan.

**3.** Flüssikristallzusammensetzung nach Anspruch 1, dadurch gekennzeichnet, daß der in der Zusammensetzung anwesende Flüssigkristall eine positive dielektrische Anisotropie besitzt.

**4.** Flüssikristallzusammensetzung nach Anspruch 1, dadurch gekennzeichnet, daß der in der Zusammensetzung anwesende Flüssigkristall eine negative dielektrische Anisotropie besitzt.

**5.** Flüssigkristallzusammensetzung nach Anspruch 1, dadurch gekennzeichnet, daß sie zwischen 1% und 20%, vorzugsweise zwischen 3% und 8% von Vorpolymeren von Formel I enthält.

**6.** Flüssigkristallzusammensetzung nach Anspruch 1, dadurch gekennzeichnet, daß das netzartige Gitter durch Beimengung eines weiteren copolymerisierbaren Monomers zu dem Vorpolymeren von Formal I erhalten ist.

**7.** Flüssigkristallzusammensetzung nach Anspruch 6, dadurch gekennzeichnet, daß das weitere copolymerisierbare Monomer auch ein Vorpolymeren von Formel I ist.

**8.** Herstellungsverfahren einer Flüssigkristallzusammensetzung nach einem der Ansprüche 1 bis 7, dadurch gekennzeichnet, daß das netzartige Gitter durch Polymerisation oder Copolymerisation unter Ultraviolettbestrahlung gebildet wird.

**9.** Verfahren nach Anspruch 8, dadurch gekennzeichnet, daß das polymerisierbare Gemisch außerdem einen Photokatalysator enthält.

**10.** Flüssigkristallzelle umfassend zwei gegenüber angeordnete durchsichtige Träger, die auf ihren Innenflächen mit durchsichtigen Elektroden versehen sind, die mit einer Spannungsquelle über einen Steuerkreis verbunden sind, wobei die Zelle durch eine Einfassung geschlossen ist, um in dem von den Trägern und der Einfassung abgegrenzten Raum eine Flüssigkristallzusammensetzung aufzunehmen, dadurch gekennzeichnet, daß die Flüssigkristallzusammensetzung einen Flüssigkristall von geringem Molekulargewicht, in dessen Innern ein netzartiges Gitter durch Polymerisation von einem nicht flüssigkristallinen Vorpolymeren gebildet ist, wie es in den Ansprüchen 1 bis 9 definiert ist, umfaßt.

**11.** Flüssigkristallzelle nach Anspruch 10, dadurch gekennzeichnet, daß mindestens eine der durchsichtigen Elektroden aus Segmenten aufgebaut ist, an die selektiv eine Spannung anlegbar ist, um eine Zelle mit graphischer, numerischer oder alphanumerischer Anzeige zu bilden.

**12.** Flüssigkristallzelle nach Anspruch 11, dadurch gekennzeichnet, daß sie außerdem einen Reflektor beinhaltet.

**13.** Flüssigkristallzelle nach Anspruch 10, dadurch gekennzeichnet, daß die Flüssigkristallzusammensetzung außerdem einen dichroitischen Farbstoff enthält.

## Claims

**1.** Liquid crystal composition in the form of anisotropic gel having a low molecular weight liquid crystal inside which there is formed a cross-linking network obtained by polymerisation of a prepolymer, characterized in that said network presents a degree of intermediate order between that of an oriented network obtained from a prepolymeric liquid crystal and that of an ordinary network obtained from a strictly isotropic prepolymer, non-liquid crystal corresponding to the following formula I:

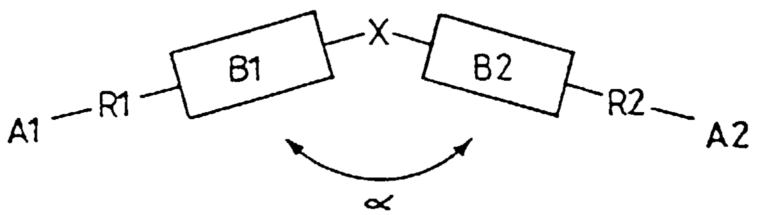

in which :

- X is a non-mesogenic bivalent central group the free bonds of which form an angle $\alpha$ smaller than 180°, said central group being selected from the groups diphenylether, diphenylmethane, 2,2-diphenyl propane, diphenylthioether, diphenylsulfone and 1,2 or 1,3 phenylene optionally substituted by one or more alkyl, alkoxy, trifluoromethyl or halogene.
- $B_1$ and $B_2$ are rigid cyclic groups selected from the groups phenyl, benzoate, biphenyl, pyrimidine, dioxane and cyclohexyl, which would confer liquid crystal properties to the prepolymer if X were selected to give an angle $\alpha$ = 180°.
- $R_1$ and $R_2$ are the same or different, each representing an alkyl, alkoxy, aralalkyl or aralalkoxy chain, which may optionally be substituted;
- $A_1$ and $A_2$ are the same or different, each representing a reactive polymerisable function selected from an acrylate, a methacrylate, a vinyl and an epoxy.

**2.** Liquid crystal composition according to claim 1, characterized in that the prepolymer of formula I is selected from among 4,4'-bis{4-[6-(acryloyloxy)hexyloxy]-benzoate}phenylether, 4,4'-bis{4-[6-(acryloyloxy)hexyloxy] -benzoate} diphenylenemethane, or 4,4'-bis{4-[6-(acryl-oyloxy)hexyloxy]benzoate}diphenylene-2,2-propane.

3. Liquid crystal composition according to claim 1, characterized in that the liquid crystal present in the composition has positive dielectric anisotropy.

4. Liquid crystal composition according to claim 1, characterized in that the liquid crystal present in the composition has a negative dielectric anisotropy.

5. Liquid crystal composition according to claim 1, characterized in that it contains between 1% and 20%, preferably between 3% and 8% of prepolymer of formula I.

6. Liquid crystal composition according to claim 1, characterized in that the cross-linking network is obtained by adding another copolymerisable monomer to the prepolymer of formula I.

7. Liquid crystal composition according to claim 6, characterized in that the other copolymerisable monomer is also a prepolymer of formula I.

8. Process for obtaining a liquid crystal composition according to any one of claims 1 to 7, characterized in that the cross-linking network is formed by polymerisation or copolymerisation under ultraviolet radiation.

9. Process according to claim 8, characterized in that the polymerisable mixture also contains a photoinitiator.

10. Liquid crystal cell comprising two opposing transparent supports provided on their inside faces with transparent electrodes connected to a voltage source via the intermediary of a control circuit, said cell being closed by a sealing frame to receive in the space delimited by the supports and the sealing frame a liquid crystal composition, characterized in that said liquid crystal composition comprises a low molecular weight liquid crystal in the interior of which a cross-linking network is formed by polymerisation of a non-liquid crystal prepolymer, such as defined in claim 1 to 9.

11. Liquid crystal cell according to claim 10, characterized in that at least one of the transparent electrodes is arranged in segments adapted to be selectively placed under voltage to form a graphic, numeric or alphanumeric display cell.

12. Liquid crystal cell according to claim 11, characterized in that it also has a reflector.

13. Liquid crystal cell according to claim 10, characterized in that the liquid crystal composition also contains a dichroic dye.

Fig.1

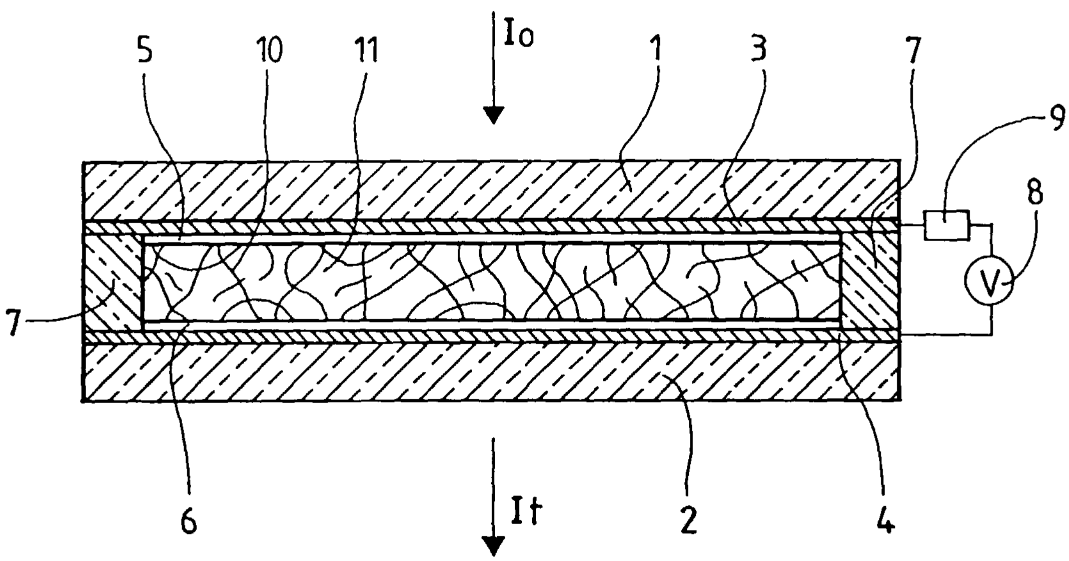

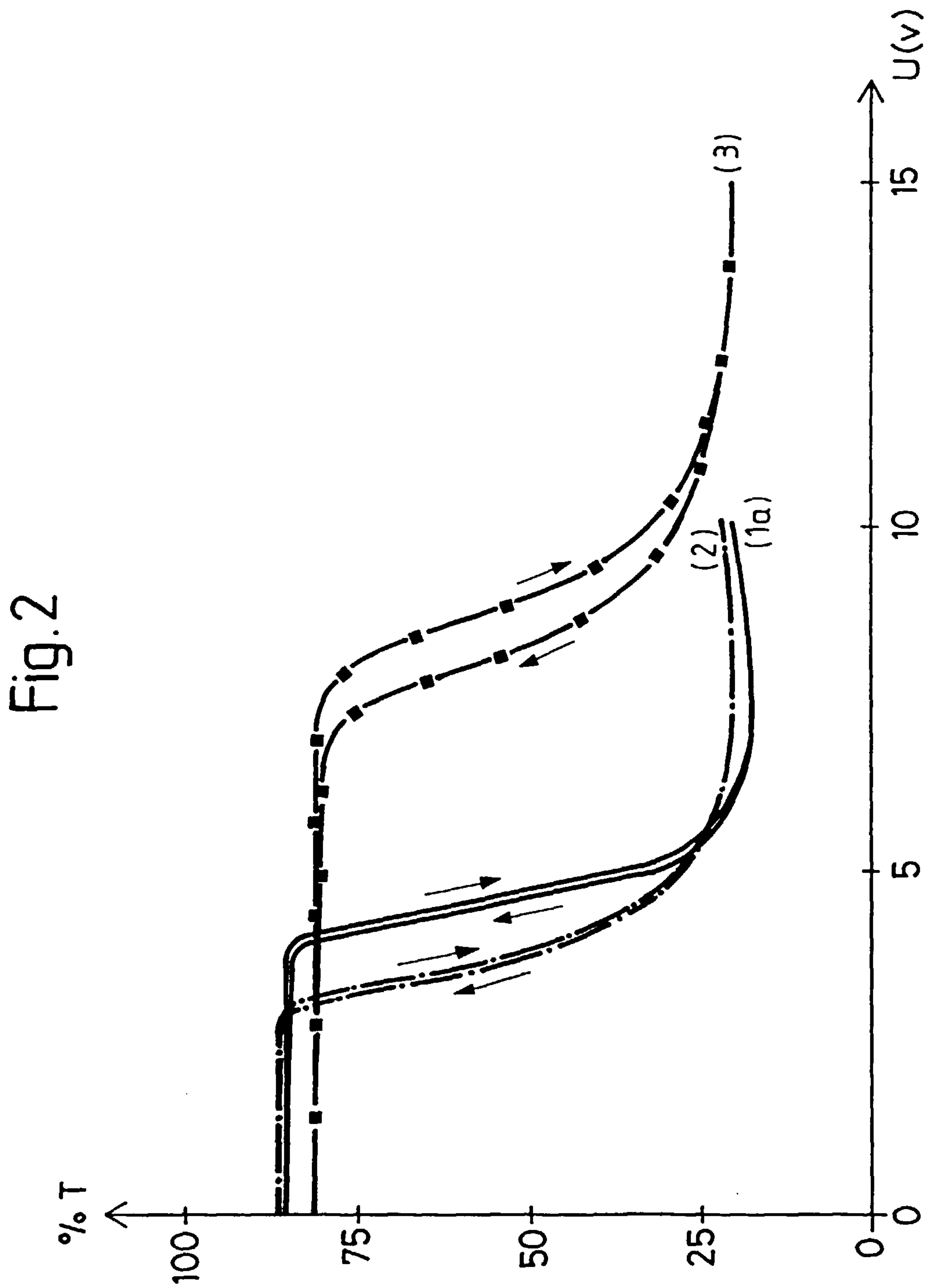


Fig.2

Fig. 3

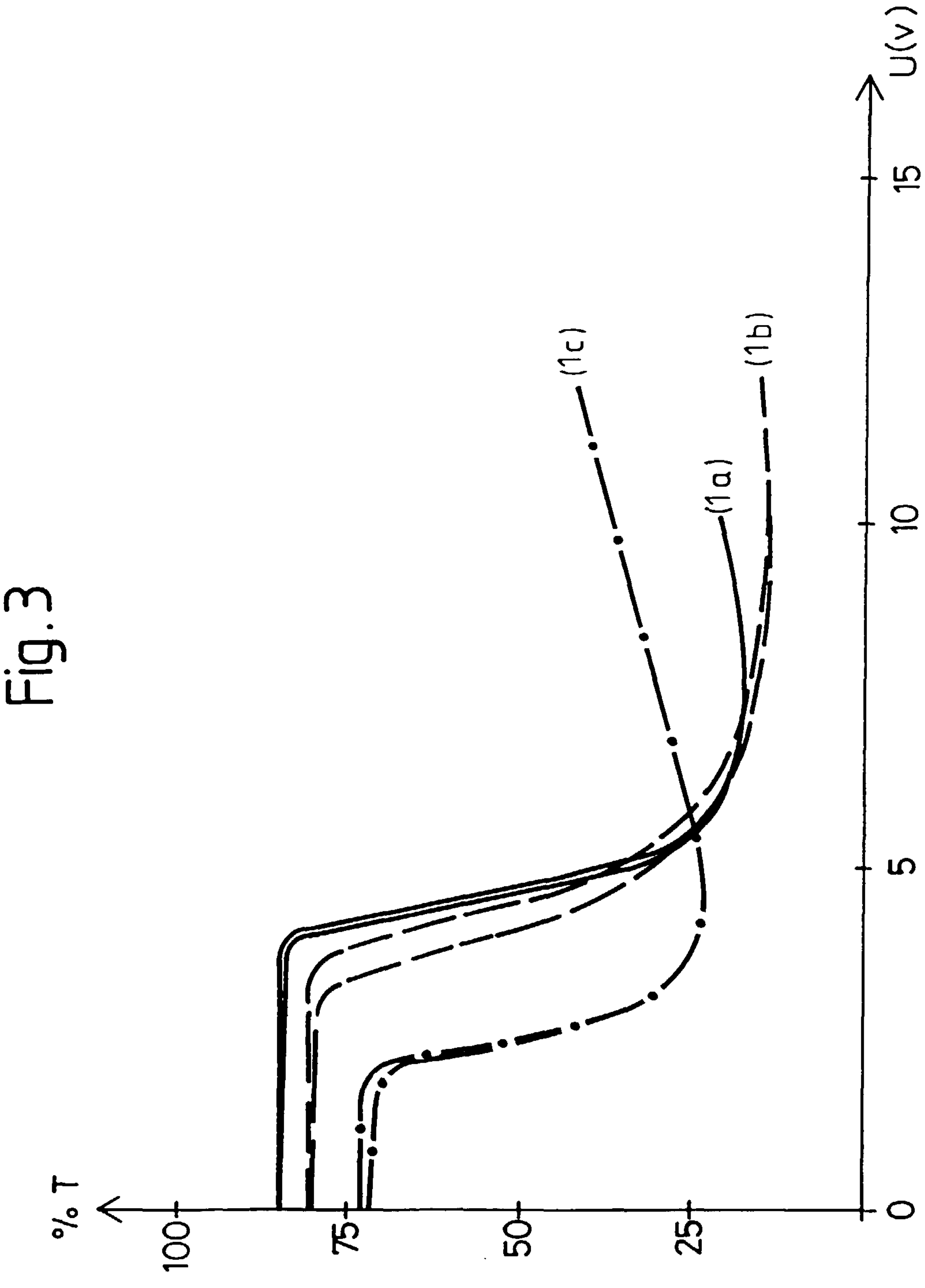

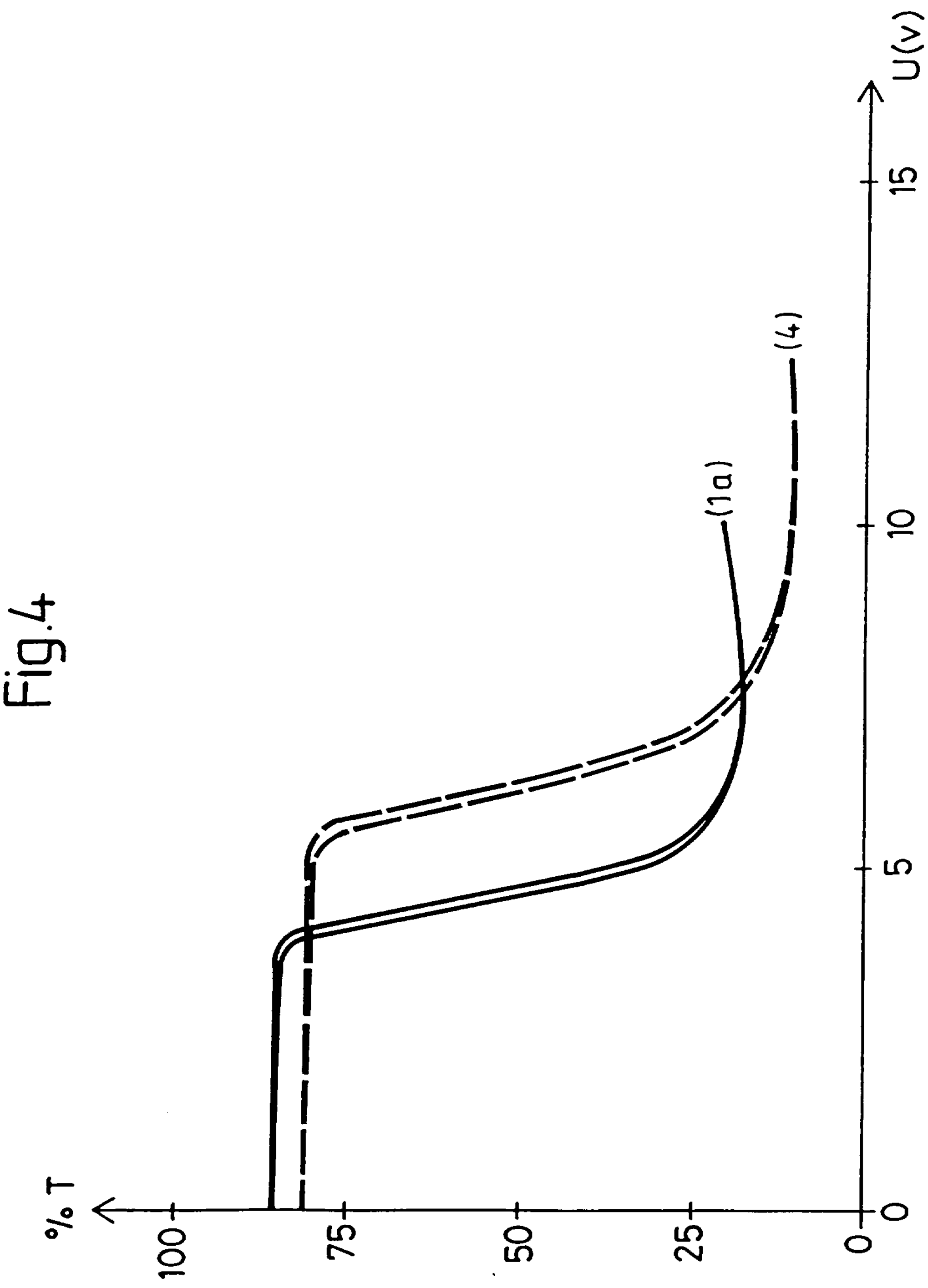


Fig.4

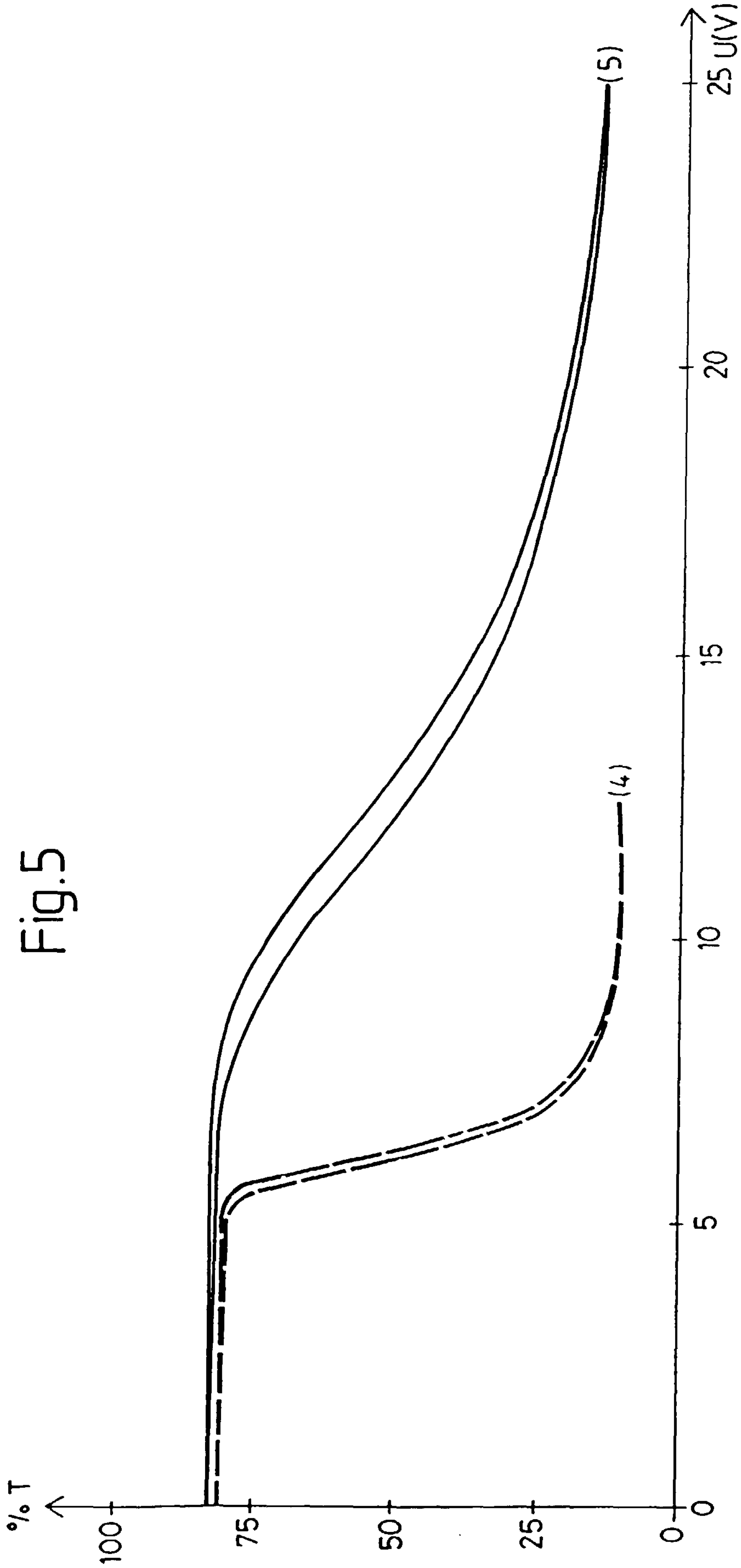


Fig.5

Fig.6

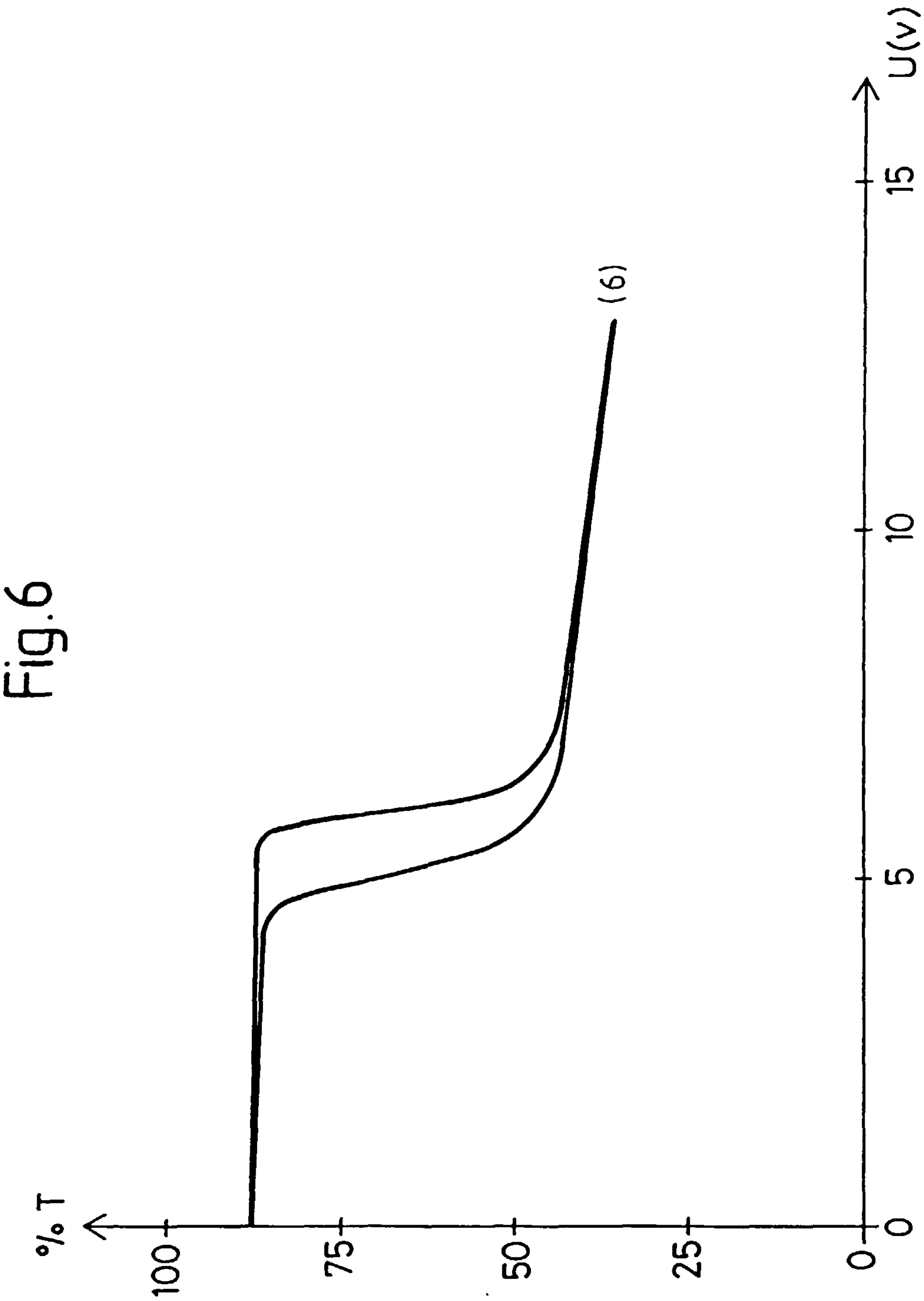

Fig.7

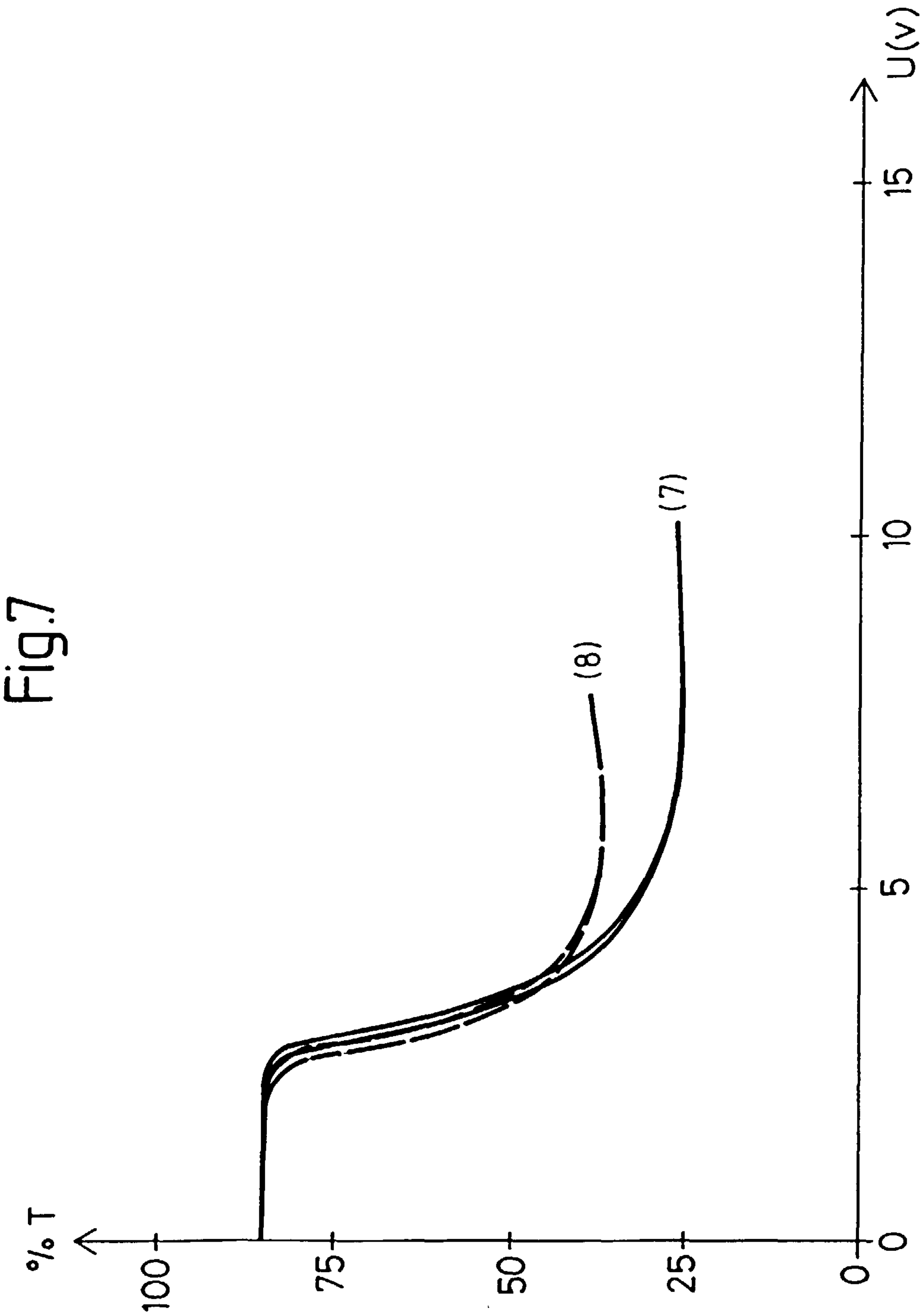

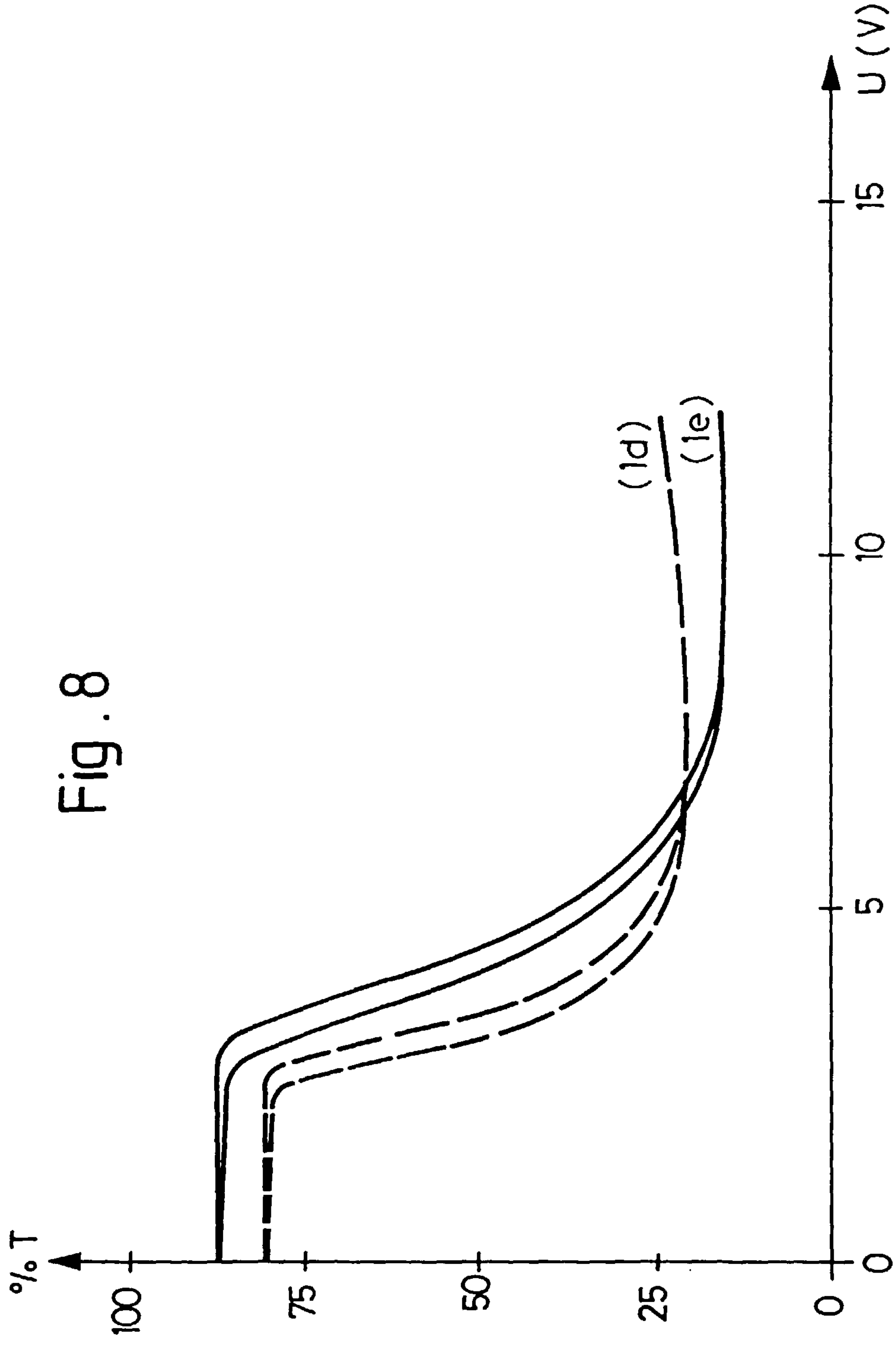


Fig. 8

Fig. 9